# FASCICULE DE BREVET EUROPEEN

(11) **EP 3 378 764 B1**
(45) Date de publication et mention de la délivrance du brevet: **13.03.2019**
(21) Numéro de dépôt: 18158130.7
(22) Date de dépôt: 22.02.2018
(51) Int. Cl.: B64C 27/00, F16F 15/00

(54) **GIRAVION EQUIPE D'UN SYSTEME ANTIVIBRATOIRE ET METHODE DE REGLAGE D'UN TEL SYSTEME ANTIVIBRATOIRE**
DREHFLÜGELFLUGZEUG, DAS MIT EINEM SCHWINGUNGSDÄMPFENDEN SYSTEM AUSGESTATTET IST, UND REGULIERUNGSMETHODE EINES SOLCHEN SCHWINGUNGSDÄMPFENDEN SYSTEMS
A ROTORCRAFT FITTED WITH AN ANTIVIBRATION SYSTEM, AND A METHOD OF ADJUSTING SUCH AN ANTIVIBRATION SYSTEM

(30) Priorité: 20.03.2017 FR 1770266
(43) Date de publication de la demande: 26.09.2018
(73) Titulaire: Airbus Helicopters, 13725 Marignane Cedex (FR)
(72) Inventeur: HONNORAT, Olivier, 13290 AIX EN PROVENCE (FR); MALBURET, François, 13111 COUDOUX (FR)
(74) Mandataire: GPI & Associés

(56) Documents cités:
- EP-A1- 2 527 250
- EP-A1- 2 594 481
- EP-A1- 2 845 799
- FR-A1- 2 492 933
- FR-A1- 2 499 505
- FR-A1- 2 747 098
- FR-A1- 2 769 396
- FR-A1- 2 772 125
- FR-A1- 2 787 762

## Description

La présente invention se rapporte au domaine des giravions et plus particulièrement à l'amortissement des vibrations causées par l'ensemble dynamique tournant comportant un rotor principal et une boîte principale de transmission de puissance, dite "BTP" dont les éléments engrénants sont entrainés en rotation par au moins un moteur du giravion.

Lors de la rotation de l'ensemble dynamique tournant, des excitations dynamiques sont en effet générées par le rotor et transmises au fuselage du giravion. De telles vibrations résultantes sont alors une source de fatigue pour les matériaux et les équipements ainsi que d'inconfort pour l'équipage et les passagers du giravion.

En effet, il est rappelé que le torseur des actions mécaniques est composé d'une partie statique provenant des "efforts" de vol et d'une partie dynamique donnée par les excitations dynamiques induites par le rotor sur le fuselage. Ainsi, la liaison entre la BTP et le fuselage d'un giravion répond à un objectif double :
- assurer le passage des actions mécaniques statiques nécessaires à la sustentation du fuselage du giravion dans les différentes phases de vol, et
- filtrer les actions dynamiques issues du rotor pour assurer un confort de vol acceptable et une tenue mécanique suffisante.

De façon générale, pour limiter ces excitations dynamiques, voire les éliminer, auxquelles est soumis le fuselage du giravion, il est connu d'équiper la liaison mécanique entre la BTP et le fuselage avec un système de type Suspension Antivibratoire à Résonateur Intégré à Barres également couramment désigné par suspension SARIB ou par l'acronyme "SARIB".

A cet effet, un giravion de type conventionnel comporte de façon connue un ensemble de N barres dites "barres BTP" ; chaque barre étant fixée à la partie supérieure du carter de la BTP dans sa partie haute et articulée dans sa partie inférieure sur un organe de suspension des barres BTP permettant de supporter l'ensemble dynamique tournant combiné à un système de N systèmes antirésonants indépendants, dits ci-après résonateurs, chacune des barres étant ainsi reliée à un résonateur.

Par ailleurs, chaque résonateur est généralement composé :
- d'un batteur associé à une barre BTP comportant un support de masse solidaire par l'une de ses extrémités à un organe de suspension et muni à son autre extrémité d'une masse battante, ce batteur étant caractérisé par une inertie majoritairement obtenue par ladite masse battante et étant sollicité par la barre BTP correspondante, et
- d'un organe de suspension comportant un moyen de rappel élastique tel un ressort caractérisé par une raideur adaptée, sollicité en traction/compression ou encore en torsion, reliant la partie inférieure de la BTP au fuselage de telle sorte que l'extrémité interne de cet organe de suspension est fixée à la partie inférieure de la BTP et l'extrémité externe est articulée au fuselage.

En outre, il existe différents types de suspensions SARIB comportant des organes de suspension de différentes natures. Cependant, le fonctionnement mécanique de ces différents organes de suspension est similaire car ils permettent respectivement d'obtenir le même résultat à savoir une "souplesse" de la liaison de suspension selon une direction parallèle à l'axe de rotation du rotor principal du giravion.

Ainsi, selon un premier exemple d'organe de suspension il peut comporter au moins une lame flexible qui peut être souple en pompage, roulis et tangage, mais très rigide en lacet ainsi qu'en tamis longitudinal et latéral. Selon ce premier exemple, le batteur est alors solidarisé avec une portion rigide de ladite lame flexible. En outre, un tel premier exemple d'organe de suspension à lames flexibles a notamment été décrit par le Demandeur dans les documents FR 2 499 505 et FR 2 747 098.

Par ailleurs, selon un second exemple d'organe de suspension les lames flexibles décrites précédemment peuvent être remplacées par des bras rigides et des ressorts sollicités en torsion respectivement agencés au niveau d'une liaison pivot entre une extrémité de chacun des bras rigides et le fuselage du giravion. Ce second exemple d'organe de suspension a quant à lui été notamment décrit par le Demandeur dans le document FR 2 787 762.

Dans les deux cas, cette suspension SARIB est à trois degrés de liberté. En effet, seuls les mouvements nécessaires de la BTP en pompage, en roulis et en tangage sont possibles : les mouvements de tamis longitudinal et latéral sont bloqués au niveau du fond de la BTP par une membrane de reprise du couple de réaction du rotor principal.

Le principe de la suspension SARIB est de créer par la superposition des effets d'inertie du batteur et des efforts de rappel générés par le moyen de rappel élastique une antirésonance utilisée pour diminuer, voire supprimer, les excitations dynamiques. Pour cela, il est nécessaire d'adapter les valeurs de la masse et de la position de la masse battante du batteur et celles de la raideur du moyen de rappel élastique pour que la fréquence d'antirésonance de la suspension SARIB corresponde à la fréquence des excitations dynamiques transmises au fuselage du giravion par l'ensemble dynamique tournant via les barres BTP.

Quelle que soit l'origine de l'excitation dynamique, avec un rotor bien équilibré, le fuselage vibre sur des fréquences qui sont un harmonique en kbΩ, où k est un nombre entier, b représente le nombre de pales du rotor principal et Ω la fréquence du mouvement de rotation du rotor principal.

Dans la plupart des cas, l'excitation dynamique sur le premier harmonique bΩ est prépondérante. Après réglage de la masse et de la position de ladite masse battante ainsi qu'après le réglage de la raideur du moyen de rappel élastique de l'organe de suspension, la fonction de transfert de la suspension SARIB fait alors apparaitre une antirésonance utilisée pour atténuer, et si possible supprimer, les excitations dynamiques en cas de réglage optimal. Alors, la fréquence d'antirésonance est généralement égale à bΩ comme expliqué précédemment.

Cependant, le réglage d'une suspension SARIB, à savoir en pratique le choix de la valeur de la masse et celle de la position de la masse battante agencée à proximité d'une extrémité libre du batteur et/ou celle de la raideur du moyen de rappel élastique de l'organe de suspension, dépend de la configuration de vol du giravion. En effet, selon les cas de vol, par exemple un vol stationnaire, un virage, un vol en palier, etc... chaque barre BTP est plus ou moins chargée car le torseur des excitations dynamiques provenant de l'ensemble dynamique tournant (comprenant les composantes des efforts et des moments issues des efforts aérodynamiques et d'inertie lors de la rotation de l'ensemble dynamique tournant) varie grandement. Ainsi, un réglage optimal de la suspension SARIB pour un cas de vol stationnaire n'est a priori pas optimal pour les cas de vol de croisière. Il est alors nécessaire de trouver un réglage de la suspension SARIB qui soit le meilleur compromis permettant de limiter les vibrations transmissent à la structure quel que soit le cas de vol.

Le réglage d'un tel système antivibratoire correspond la plupart du temps à une suspension SARIB de type passif. Par exemple, ce réglage peut être réalisé par le biais d'un jeu d'organes de rappel élastique présentant différentes raideurs et/ou en modifiant la valeur de la masse de la masse battante et/ou en déplaçant le centre d'inertie du batteur par déplacement de ladite masse battante. Ceci est alors obtenu par des séquences de réglage alternant mesures, montages et démontages, générant alors de nombreuses mises au point.

Pour améliorer cette situation, il a également été développé des suspensions SARIB de type piloté ou semi-actif tels que notamment décrits par le demandeur dans le document FR 2 747 098.

Le principe général est d'automatiser la procédure de réglage par le biais d'un calculateur qui, au moyen d'un algorithme adapté, rend autonome le réglage du système antivibratoire. Dans ce cas, la masse battante ou une partie de cette masse battante agencée à proximité de l'extrémité libre du batteur peut être déplacée pour faire varier l'inertie équivalente du batteur ramenée au centre de la liaison de type pivot du batteur avec le fuselage du giravion.

Un dispositif simple est d'agencer sur le batteur un moteur électrique pas à pas permettant de déplacer via un système de vis sans fin tout ou partie de la masse battante le long d'un axe longitudinal du batteur. Un tel déplacement de la masse battante s'effectue alors entre une position basse et une position haute le long de l'axe longitudinal du batteur.

De façon connue, le réglage d'un SARIB de type piloté est réalisé en plaçant un ou plusieurs accéléromètres dans la cabine du giravion pour mesurer les vibrations résultantes représentatives d'un niveau vibratoire du giravion en plusieurs points.

On définit alors un critère de niveau vibratoire global du giravion. Ce critère est le plus communément fonction de la moyenne quadratique des amplitudes suivant une composante verticale des vibrations résultantes mesurées par ces accéléromètres agencés sur le fuselage.

La méthode de réglage procède alors au déplacement de la masse battante à partir d'une position initiale, les masses battantes des différents batteurs étant déplacées indépendamment l'une après l'autre selon un pas relativement important dans un premier temps puis avec un pas plus fin pour affiner le réglage dans un second temps.

On analyse ensuite l'effet produit par le déplacement d'une masse battante sur les variations du critère vibratoire utilisé. En conséquence, on modifie ou non le sens de déplacement de ladite masse battante qui peut descendre ou monter le long de l'axe longitudinal du batteur. Cette étape de réglage correspondant au déplacement de la masse battante est reproduite jusqu'à satisfaire le critère portant sur le niveau vibratoire suivant une règle établie. Une telle règle correspond généralement au passage en dessous d'un seuil prédéterminé du niveau des vibrations résultantes moyennes transmises au fuselage du giravion.

Cette méthode est communément appelée « méthode du gradient » et est basée sur la minimisation de l'amplitude des « moindres carrés » ou moyenne quadratique des vibrations résultantes transmises au fuselage du giravion.

Cette méthode de réglage permet de faire varier le réglage des masses battantes de chaque batteur et de l'adapter en fonction de la configuration de vol du giravion en présentant néanmoins de nombreux inconvénients.

Une telle méthode de réglage est très lente à mettre en oeuvre. En effet, la convergence vers un réglage optimal du positionnement des éléments mobiles est très aléatoire car le changement d'état du critère correspondant à la synthèse de la norme de tous les accéléromètres est lui-même très lent. De plus, ce critère fluctue également de façon très lente, ce qui implique une suite de phases de réglage puis de déréglage du positionnement de chaque masse battante le long de l'axe longitudinal respectif de chaque batteur pour enfin converger en dessous d'une certaine valeur seuil.

Cette méthode ne peut donc pas permettre de faire converger rapidement le réglage du SARIB de type piloté de façon fiable. Elle correspond plutôt à un outil de conception et d'essais permettant de trouver les paramètres de mise au point d'un SARIB de type passif qui sera par la suite utilisé en série sur une flotte de giravions.

En outre, une telle méthode impose de réaliser un réglage du positionnement des masses battantes sur des phases de vol totalement stabilisées correspondant par exemple à une période de test d'une trentaine de secondes en moyenne. En effet, cette méthode de réglage du SARIB converge lentement et le torseur des actions mécaniques produites par l'ensemble dynamique tournant doit absolument rester inchangé durant cette phase pour éviter de perturber les conditions de chargement et éviter une convergence impossible vers un réglage optimal du positionnement des masses battantes.

Comme déjà évoqué, ces défauts font que cette méthode de réglage est réservée aux préréglages de systèmes antivibratoires ou à des systèmes antivibratoires qui accepteraient, suite à un changement de configuration d'un organe du giravion, un temps long pour obtenir les nouvelles valeurs de réglage.

On ne peut, au moyen de tels systèmes antivibratoires de type pilotés ou semi-actifs utilisant cette méthode de réglage, en aucun cas obtenir un réglage en « temps réel » d'un système antivibratoire qui permette un réglage optimal du positionnement des masses battantes, et donc un réglage apte à permettre l'antirésonance notamment, suivant des régimes transitoires entre deux phases de vol du giravion non parfaitement stabilisées.

La présente invention a alors pour objet de proposer un système antivibratoire et une méthode de réglage de ce système permettant de s'affranchir des limitations mentionnées ci-dessus.

Le but de l'invention est donc de permettre un réglage fin et rapide du positionnement respectif des masses battantes le long des axes longitudinaux des différents batteurs respectifs. Ce réglage est par ailleurs fiable et permet de garantir à tout instant un compromis optimal de confort et de tenue mécanique quelle que soit la phase de vol du giravion.

Ainsi, l'invention se rapporte à un giravion comportant :
- un rotor principal permettant au moins de réaliser une sustentation, voire une propulsion, du giravion,
- au moins un moteur pour entrainer en rotation le rotor principal par rapport à un fuselage du giravion,
- une boîte de transmission principale de puissance, dite BTP, pour transmettre un mouvement de rotation généré par le(s) moteur(s) au rotor principal, et
- un système antivibratoire agencé à l'interface entre le fuselage du giravion et un carter de la BTP, ce système antivibratoire comportant :
   - au moins un batteur comportant :
      ▪ une structure rigide de forme longiligne s'étendant suivant une direction longitudinale Da-Dd entre une première extrémité solidarisée avec le fuselage selon une articulation à au moins un degré de liberté en rotation de centre O et une deuxième extrémité libre,
      ▪ une masse battante apte à se déplacer en translation suivant un axe longitudinal La-Ld parallèle à la direction longitudinale Da-Dd de la structure rigide, et
      ▪ des organes motorisés permettant de commander le déplacement en translation de la masse battante le long de l'axe longitudinal La-Ld,
   - au moins un organe de suspension comportant un moyen de rappel élastique apte à rappeler en position le (ou les) batteur(s) dans une position centrale, le (ou les) batteur(s) pouvant osciller alternativement autour de la position centrale suivant un mouvement de rotation de centre O,
   - au moins un premier accéléromètre agencé sur le fuselage du giravion permettant de mesurer suivant au moins une direction des vibrations résultantes auxquelles est soumis le fuselage,
   - des premiers moyens d'entrée pour recevoir des mesures des vibrations résultantes,
   - au moins un calculateur relié aux premiers moyens d'entrée pour analyser en fonction du temps les mesures des vibrations résultantes.

Selon l'invention, un tel giravion est remarquable en ce que le système antivibratoire comporte :
- au moins un second accéléromètre agencé sur le carter de la BTP permettant de mesurer suivant au moins une direction des excitations dynamiques auxquelles est soumis le carter de la BTP, et
- des seconds moyens d'entrée pour recevoir des mesures desdites excitations dynamiques,
et en ce que le (ou les) calculateur(s) est (sont) relié(s) aux seconds moyens d'entrée pour analyser en fonction du temps les mesures des excitations dynamiques, le (ou les) calculateur(s) permettant de calculer un déphasage temporel ϕ entre les excitations dynamiques et les vibrations résultantes, et permettant de piloter les organes motorisés en fonction de ce déphasage temporel ϕ.

En outre comme déjà évoqué, chaque organe de suspension peut comprendre un moyen de rappel élastique apportant la raideur nécessaire pour reprendre les efforts statiques transitant dans des barres BTP. Ce moyen de rappel élastique peut ainsi être formé par une lame travaillant en flexion, solidaire du batteur et reposant à son extrémité sur le fond de la BTP. Dans d'autres variantes, un tel moyen de rappel élastique peut être constitué d'un tube de torsion ou plus simplement d'un ressort sollicité en torsion monté au niveau de l'articulation à au moins un degré de liberté en rotation de centre O entre la structure rigide du batteur et le fuselage du giravion.

Par ailleurs, le carter de la boite BTP sur lequel est agencé le (ou les) second(s) accéléromètre(s) peut se présenter sous différentes formes et notamment sous la forme d'un carter indépendant solidarisé avec le moteur du giravion ou encore d'un carter formant un ensemble monolithique avec un carter du moteur.

En outre, le (ou les) premier(s) accéléromètre(s) agencé(s) sur le fuselage et le (ou les) second(s) accéléromètre(s) agencé(s) sur le carter de la BTP permettent de mesurer notamment les variations de l'amplitude et de la fréquence des excitations dynamiques et des vibrations résultantes ou du déphasage entre les excitations dynamiques et les vibrations résultantes.

Autrement dit, un tel système antivibratoire permet de régler en temps réel la position de l'élément mobile le long de l'axe longitudinal La-Ld en identifiant un déphasage temporel ϕ entre les les excitations dynamiques et les vibrations résultantes. En outre un tel déphasage temporel ϕ peut également être représenté par une phase de la fonction de transfert selon un modèle mathématique illustrant la relation entre les excitations dynamiques et les vibrations résultantes. Généralement pour représenter le comportement fréquentiel d'une fonction de transfert, il est connu d'utiliser un diagramme dit "de Bode" permettant l'étude d'un système asservi de façon simplifiée.

Le diagramme de Bode d'un système de réponse fréquentielle est ainsi une représentation graphique composée de deux tracés, à savoir le gain en décibel(s) (dB) de la fonction de transfert et la phase en degré(s) qui est l'argument de cette fonction de transfert.

Une telle phase réelle peut alors être représentée et tracée à partir d'un diagramme asymptotique de la fonction de transfert qui dans le cas présent peut correspondre à un filtre passe bas d'ordre supérieur ou égal à 2.

Le diagramme asymptotique représentatif de la phase réelle ou du déphasage temporel ϕ d'un tel système antivibratoire est donc une courbe variant de 0 à -180° en fonction de la fréquence des vibrations. Ainsi selon ce diagramme asymptotique, la phase est égale à 0° pour les fréquences inférieures à la fréquence d'antirésonance, varie brusquement à la fréquence d'antirésonance pour atteindre -90° précisément à ce niveau puis est égale à -180° pour les fréquences supérieures à la fréquence d'antirésonance.

Cette variation brusque et précise du déphasage temporel ϕ à la fréquence d'antirésonance permet ainsi d'effectuer un réglage rapide et fiable de la position de la masse battante le long de l'axe longitudinal La-Ld pour chacun des batteurs équipant le système antivibratoire du giravion.

Avantageusement, les organes motorisés peuvent commander le déplacement en translation de la masse battante le long de l'axe longitudinal La-Ld selon un premier sens de translation lorsque le déphasage temporel ϕ est supérieur à une première valeur de seuil ϕ1 et inversement le déplacement en translation de la masse battante le long de l'axe longitudinal La-Ld selon un second sens de translation lorsque le déphasage temporel ϕ est inférieur à une seconde valeur de seuil ϕ2.

En d'autres termes, tant que la valeur du déphasage temporel ϕ est supérieure à la première valeur de seuil ϕ1 la masse battante est déplacée par les organes motorisés le long de l'axe longitudinal La-Ld suivant le premier sens de translation.

Cependant si les conditions du vol changent brusquement, tel un changement de pression atmosphérique ou une bourrasque de vent par exemple, ou encore si la phase de vol du giravion est modifiée volontairement par son pilote, les vibrations résultantes peuvent alors évoluer sans que la masse battante soit déplacée. Dans ce cas, la valeur du déphasage temporel ϕ peut devenir inférieure à la seconde valeur de seuil ϕ2 et la masse battante est alors déplacée par les organes motorisés le long de l'axe longitudinal La-Ld suivant le deuxième sens de translation opposé au premier sens pour revenir au dessus de la seconde valeur de seuil ϕ2.

En pratique, les organes motorisés peuvent stopper le déplacement en translation de la masse battante le long de l'axe longitudinal La-Ld lorsque le déphasage temporel ϕ est compris entre les première et seconde valeurs de seuil ϕ1 et ϕ2.

Ainsi, si le déphasage temporel ϕ augmente et devient supérieur à la seconde valeur de seuil ϕ2, le calculateur permet de piloter l'arrêt des organes motorisés. Par analogie, si le déphasage temporel ϕ diminue et devient inférieur à la première valeur de seuil ϕ1, le calculateur permet de piloter l'arrêt des organes motorisés.

Selon un exemple de réalisation avantageux de l'invention, la première valeur de seuil ϕ1 peut être égale à -90°+α et la seconde valeur de seuil ϕ2 être égale à -90°-α, α étant un angle compris entre 1 et 20° et préférentiellement compris entre 5° et 15°.

De telles première et seconde valeurs de seuil permettent en effet d'encadrer la fréquence d'antirésonance d'un filtre passe bas d'ordre 2 pour laquelle la phase de la fonction de transfert varie brusquement et vaut précisément -90°. Si par exemple α est égal à 10°, la première valeur de seuil ϕ1 vaut alors -80° et la seconde valeur de seuil ϕ2 vaut -100°. Un tel angle α permet en outre de conférer au système antivibratoire un critère de réglage supplémentaire pour adapter la rapidité de convergence vers un réglage optimal du positionnement des masses battantes.

Avantageusement, le (ou les) premier(s) accéléromètre(s) peu(ven)t être agencé(s) sur le fuselage du giravion à proximité immédiate d'une platine de liaison formant partie de l'articulation à au moins un degré de liberté en rotation de centre O, la platine de liaison étant solidarisée en liaison de type pivot avec la première extrémité de la structure rigide du batteur.

De cette manière, le (ou les) premier(s) accéléromètre(s) est (sont) positionné(s) au plus proche de la source des vibrations résultantes transmises au fuselage du giravion par l'ensemble dynamique tournant. En outre, la platine de liaison est solidarisée en liaison de type encastrement avec le fuselage du giravion par exemple par vissage, boulonnage ou soudage notamment. Une telle platine de liaison peut par exemple comporter deux pattes agencées parallèlement entre elles et formant un montage dit "en chape" avec la première extrémité de la structure rigide du batteur. Ces pattes sont alors traversées par l'axe de la liaison de type pivot entre chaque platine de liaison et le batteur correspondant.

En pratique, le (ou les) premier(s) accéléromètre(s) peu(ven)t être agencé(s) sur le fuselage du giravion à proximité d'une zone soumise à des vibrations résultantes maximales.

Une telle zone soumise à des vibrations résultantes maximales peut notamment se trouver sur le plancher du fuselage à proximité d'un siège apte à recevoir un pilote ou un passager. Cette zone soumise à des vibrations résultantes maximales peut notamment constituer une zone critique pour le confort des occupants du giravion mais aussi pour la surveillance des caractéristiques de tenue mécanique en fatigue des organes mécaniques constituant le moteur, la BTP ou encore le fuselage d'un tel giravion.

En outre, un système antivibratoire peut comporter plusieurs batteurs, notamment trois ou quatre, qui peuvent être répartis symétriquement ou non par rapport à un axe de rotation du rotor principal.

Selon un premier exemple de réalisation, le (ou les) calculateur(s) peu(ven)t piloter indépendamment les organes motorisés de quatre batteurs distincts comprenant un batteur avant gauche, un batteur avant droit, un batteur arrière gauche et un batteur arrière droit, les quatre batteurs étant agencés symétriquement autour d'un axe de rotation du rotor principal.

Ainsi, le positionnement de la masse battante de chaque batteur est alors réglé indépendamment les uns par rapport aux autres. Ce réglage étant effectué de manière indépendante pour chacun des batteurs du système antivibratoire, il peut être réalisé simultanément pour l'ensemble des batteurs équipant le système antivibratoire ou bien encore les uns après les autres. Cependant dans le cas où ce réglage est effectué simultanément, la vitesse de convergence par l'utilisation du (ou des) calculateur(s) vers le réglage optimal du positionnement des masses battantes est bien entendu plus rapide.

Selon un second exemple de réalisation, le (ou les) calculateur(s) peu(ven)t comparer des amplitudes des mesures des vibrations résultantes et en fonction de cette comparaison identifier un critère de symétrie permettant de piloter les organes motorisés deux à deux simultanément de respectivement au moins quatre batteurs distincts.

En effet, par exemple lors d'un vol en palier ou d'un vol stationnaire, le moment de tangage transmis par l'ensemble dynamique tournant au fuselage du giravion est important. Or, si le système antivibratoire comporte deux batteurs avant et deux batteurs arrière agencés symétriquement autour de l'axe de rotation du rotor principal, le positionnement de la masse battante sur chacun des deux batteurs avant/arrière peut être similaire.

Par analogie, dans le cas d'une trajectoire en lacet du giravion, un critère de symétrie latérale gauche/droite peut être identifié et le positionnement de la masse battante sur chacun de deux batteurs gauche/droite peut également être similaire.

Avantageusement, le (ou les) calculateur(s) peu(ven)t piloter simultanément deux à deux les organes motorisés de quatre batteurs distincts comprenant un batteur avant gauche, un batteur avant droit, un batteur arrière gauche et un batteur arrière droit, les quatre batteurs étant agencés symétriquement autour d'un axe de rotation du rotor principal.

Par suite, le réglage du positionnement de deux masses battantes peut être réalisé de façon simultanée sur chacun des deux groupes de deux batteurs du système antivibratoire. Cependant, pour obtenir un réglage plus fin du système antivibratoire, ce réglage peut également être réalisé en effectuant alternativement un premier réglage symétrique du positionnement de deux masses battantes d'un premier groupe de deux batteurs du système antivibratoire puis un second réglage symétrique du positionnement de deux masses battantes d'un second groupe de deux batteurs.

La présente invention a aussi pour objet une méthode de réglage d'un système antivibratoire équipant un giravion tel que décrit précédemment, une telle méthode de réglage comportant :
- une première étape d'analyse pour analyser les vibrations résultantes auxquelles est soumis le fuselage du giravion,
- une étape de déplacement pour déplacer la masse battante afin de minimiser les vibrations résultantes.

Selon l'invention, une telle méthode de réglage est remarquable en ce qu'elle comporte :
- une seconde étape d'analyse pour analyser les excitations dynamiques auxquelles est soumis le carter de la BTP,
- une étape de calcul pour calculer le déphasage temporel ϕ entre les excitations dynamiques et les vibrations résultantes, et
- une étape de pilotage pour piloter les organes motorisés en fonction du déphasage temporel ϕ.

En d'autres termes, la méthode de réglage permet d'identifier le positionnement optimal des masses battantes le long des axes longitudinaux La-Ld des batteurs à partir d'un calcul du déphasage temporel ϕ entre les excitations dynamiques et les vibrations résultantes auxquelles est soumis le fuselage du giravion.

Comme déjà évoqué, ce calcul du déphasage temporel ϕ peut être déterminé à partir de la phase correspondant à l'argument de la fonction de transfert du système asservi formé par le système antivibratoire précédemment décrit.

Une telle méthode de réglage permet alors d'identifier des variations brusques de la phase de chaque fonction de transfert du système et d'adapter très rapidement en fonction de ces variations brusques détectées le positionnement de chaque masse battante le long de chaque axe longitudinal La-Ld.

Avantageusement, l'étape de pilotage peut permettre de commander le déplacement en translation de la masse battante le long de l'axe longitudinal La-Ld selon un premier sens de translation lorsque le déphasage temporel ϕ est supérieur à une première valeur de seuil ϕ1 et inversement le déplacement en translation de la masse battante le long de l'axe longitudinal La-Ld selon un second sens de translation lorsque le déphasage temporel ϕ est inférieur à une seconde valeur de seuil ϕ2.

Ainsi, l'étape de pilotage des organes motorisés permet de modifier le sens de déplacement de la masse battante en fonction de la valeur courante du déphase temporel calculée par le (ou les) calculateur(s) du système antivibratoire. Par suite, la valeur courante du déphasage temporel ϕ est itérativement comparée avec les première et seconde valeurs de seuil selon un algorithme de comparaison prédéterminé.

En pratique, l'étape de pilotage peut permettre de stopper le déplacement en translation de la masse battante le long de l'axe longitudinal La-Ld lorsque le déphasage temporel ϕ est compris entre les première et seconde valeurs de seuil.

De cette manière, l'étape de pilotage permet de figer la masse battante dans une position particulière tant que le déphasage temporel ϕ est à la fois inférieur à la première valeur de seuil ϕ1 et supérieur à la seconde valeur de seuil ϕ2.

Selon un premier exemple de réalisation, l'étape de pilotage peut piloter indépendamment les organes motorisés de quatre batteurs distincts comprenant un batteur avant gauche, un batteur avant droit, un batteur arrière gauche et un batteur arrière droit, les quatre batteurs étant agencés symétriquement autour d'un axe de rotation du rotor principal.

En effet de cette manière, chacune des masses battantes peut être déplacée indépendamment les unes des autres, simultanément ou alternativement les unes après les autres en fonction notamment des capacités de calcul du (ou des) calculateur(s).

Selon un second exemple de réalisation, la méthode peut comporter une étape de comparaison pour comparer des amplitudes des mesures des vibrations résultantes et une étape d'identification pour identifier un critère de symétrie permettant de piloter les organes motorisés deux à deux simultanément de respectivement au moins quatre batteurs distincts.

Dans ce cas, les masses battantes de deux batteurs distincts peuvent alors être déplacées de façon identique, par exemple dans un même sens de translation suivant leur axe respectif longitudinal La-Ld, en fonction de l'identification du critère de symétrie.

Avantageusement, l'étape de pilotage peut piloter simultanément deux à deux les organes motorisés de quatre batteurs distincts comprenant un batteur avant gauche, un batteur avant droit, un batteur arrière gauche et un batteur arrière droit, les quatre batteurs étant agencés symétriquement autour d'un axe de rotation du rotor principal.

Comme déjà évoqué, le réglage du positionnement d'une masse battante peut alors être réalisé de façon simultanée sur chacun des deux groupes deux batteurs du système antivibratoire. En outre, le réglage du système anti vibratoire peut également être réalisé en effectuant alternativement un premier réglage symétrique du positionnement de deux masses battantes d'un premier groupe de deux batteurs du système antivibratoire puis un second réglage symétrique du positionnement de deux masses battantes d'un second groupe de deux batteurs.

L'invention et ses avantages apparaîtront avec plus de détails dans le cadre de la description qui suit avec des exemples donnés à titre illustratif en référence aux figures annexées qui représentent :
- la figure 1, une vue schématique en coupe de côté d'un giravion conforme à l'invention,
- la figure 2, une vue en perspective d'un système antivibratoire conforme à l'invention,
- la figure 3, un schéma en vue de côté d'un système antivibratoire conforme à l'invention
- la figure 4, un graphique illustrant les variations du déphasage temporel ϕ en fonction de la fréquence des vibrations, et
- les figures 5 et 6, des logigrammes illustrant schématiquement deux exemples de réalisation de la méthode de réglage conforme à l'invention.

Les éléments présents dans plusieurs figures distinctes peuvent être affectés d'une seule et même référence.

Comme déjà évoqué, l'invention concerne le domaine des giravions et des systèmes antivibratoires permettant de garantir d'une part un confort optimal pour l'équipage, les éventuels passagers et d'autre part pour assurer une tenue mécanique optimale des structures et des équipements du giravion.

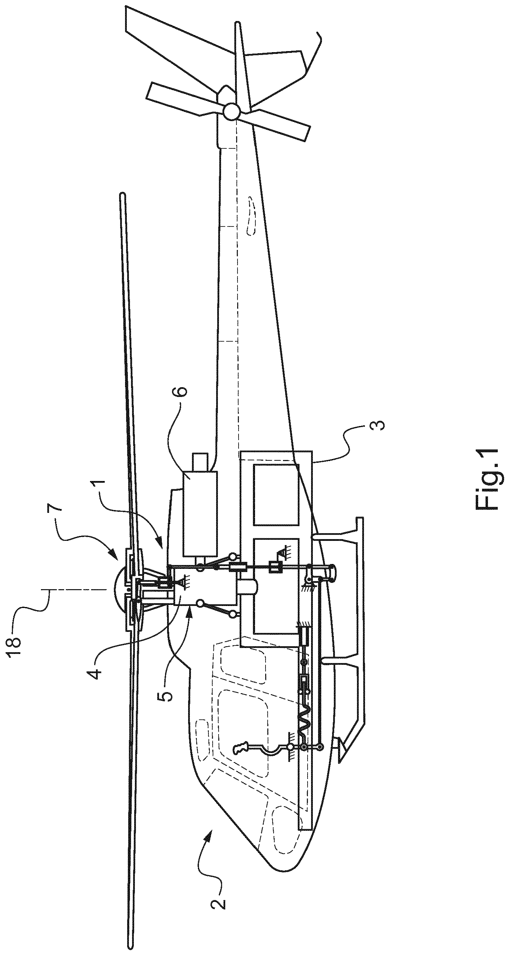

Ainsi, tel que représenté à la figure 1, un tel giravion 2 comporte au moins un moteur 6 relié une boîte de transmission principale de puissance 5, dite BTP, permettant de transmettre un mouvement de rotation et d'entraîner en rotation un rotor principal 7 autour d'un axe de rotation 18. Un système antivibratoire 1 est alors agencé à l'interface entre un carter 4 de la BTP 5 et un fuselage 3 du giravion 2.

Un tel système antivibratoire 1 permet alors d'atténuer, voire de supprimer, certaines fréquences des excitations dynamiques transmises par le carter 4 au fuselage 3 du giravion 2 notamment lors des différentes phases de vol du giravion 2.

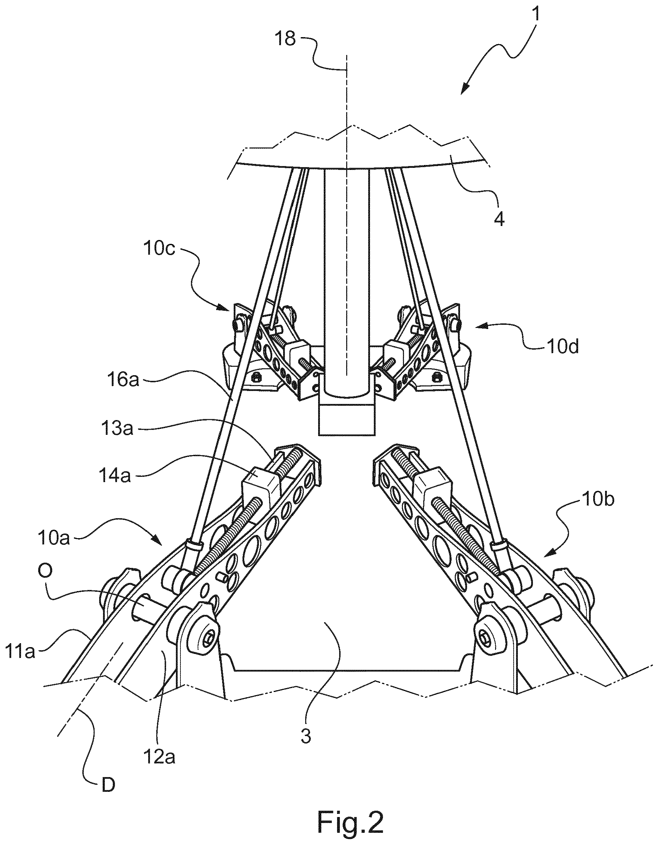

Tel que représenté à la figure 2, un tel système antivibratoire 1 peut comporter plusieurs batteurs et par exemple quatre batteurs 10a-10d, à savoir un batteur avant gauche 10a, un batteur avant droit 10b, un batteur arrière gauche 10c et un batteur arrière droit 10d. Selon un exemple de réalisation particulier, ces quatre batteurs 10a-10d peuvent alors avantageusement être agencés de manière symétrique autour de l'axe de rotation 18 du rotor principal 7.

Chaque batteur 10a-10d est relié via une barre BTP 16a-16d au carter 4 de la BTP 5 qui lui transmet des excitations dynamiques générées par l'ensemble dynamique tournant comprenant notamment le rotor 7 du giravion 2. En effet tel que représentée, chaque barre BTP 16a-16d présente une structure rigide de forme longiligne comportant une première extrémité solidarisée au niveau d'une portion supérieure du carter 4 de la BTP 5 et une deuxième extrémité solidarisée à un batteur 10a-10d. Le rôle des barres BTP est ainsi de réaliser tout ou partie de la suspension de la BTP 5 par rapport au fuselage 3 du giravion 2.

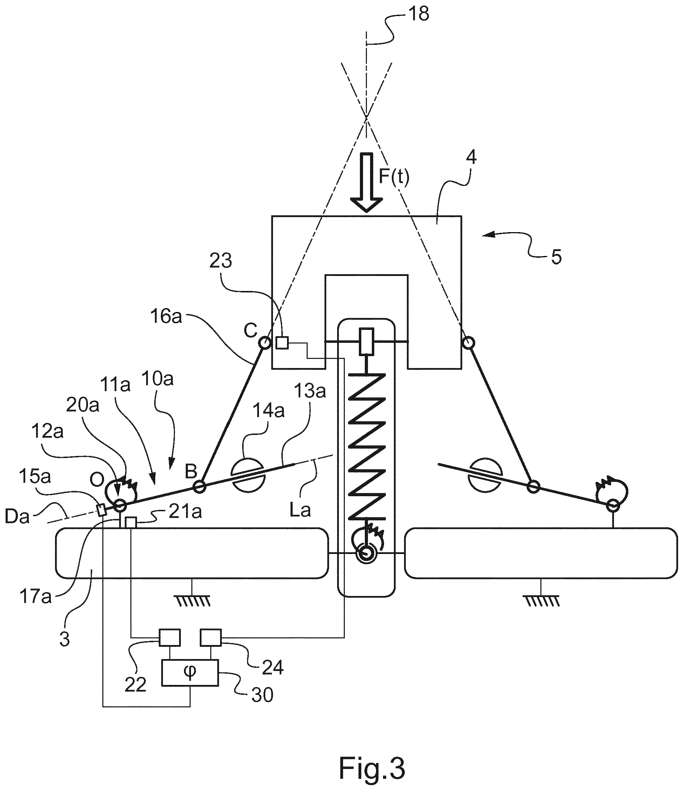

Selon la figure 3 et pour plus de clarté, chaque élément constituant les différents batteurs 10a-10d est illustré uniquement pour décrire le batteur 10a, les éléments constituants les autres batteurs 10b-10d étant bien entendu identiques. Chaque batteur 10a-10d comporte ainsi une structure rigide 11a-11d de forme longiligne s'étendant suivant une direction longitudinale Da-Dd entre une première extrémité 12a-12d solidarisée avec le fuselage 3 du giravion 2 selon une articulation à au moins un degré de liberté en rotation de centre O et une deuxième extrémité libre 13a-13d.

Par ailleurs, chaque batteur 10a-10d comporte également une masse battante 14a-14d apte à se déplacer en translation suivant un axe longitudinal La-Ld parallèle à la direction longitudinale Da-Dd de la structure rigide 11a-11d.

En outre, des organes motorisés 15a-15d permettent quant à eux de commander respectivement le déplacement en translation de chaque masse battante 14a-14d le long d'un axe longitudinal La-Ld. Ces organes motorisés 15a-15d sont ici représentés comme étant agencés à proximité de la première extrémité 12a-12d de la structure rigide 11a-11d mais peuvent également, selon d'autres exemples de réalisation, être agencés à proximité d'une deuxième extrémité libre 13a-13d de la structure rigide 11a-11d ou encore directement au niveau de la masse battante 14a-14d.

Par ailleurs, le système antivibratoire 1 comporte également au moins un organe de suspension de la BTP 5 comportant un moyen de rappel élastique 20a-20d apte à rappeler en position respectivement chacun des batteurs 10a-10d dans une position centrale. Les batteurs 10a-10d peuvent ainsi osciller alternativement autour de la position centrale suivant un mouvement de rotation de centre O.

Tel que représenté le moyen de rappel élastique peut être formé par un ressort sollicité en torsion. Cependant, l'invention ne se limite pas à cet unique exemple de réalisation donné à titre illustratif mais non limitatif. En effet, comme déjà évoqué, selon d'autres exemples de réalisation de l'invention, le moyen de rappel élastique peut également se présenter sous la forme d'une lame flexible telle que notamment décrite dans le document FR 2 747 098.

Le système antivibratoire 1 comporte des premier accéléromètres 21a-21d agencés sur le fuselage 3 du giravion 2 permettant de mesurer suivant au moins une direction des vibrations résultantes auxquelles est soumis le fuselage 3. Tels que représentés, ces premier accéléromètres 21a-21d sont agencés à proximité immédiate des platines de liaison 17a-17d solidaires du fuselage 3 et permettant de solidariser la première extrémité 12a-12d de la structure rigide 11a-11d en liaison de type pivot avec le fuselage 3.

Ces premiers accéléromètres 21a-21d sont alors connectés avec des premiers moyens d'entrée 22 permettant de recevoir des mesures des vibrations résultantes.

De même, le système antivibratoire 1 comporte également un second accéléromètre 23 agencé sur le carter 4 de la boîte de transmission principale de puissance 5, dite BTP, permettant de mesurer suivant au moins une direction des excitations dynamiques auxquelles est soumis le carter 4 de la BTP 5.

Ce second accéléromètre 23 est quant à lui connecté à des seconds moyens d'entrée 24 permettant de recevoir des mesures des excitations dynamiques.

Enfin, le système antivibratoire 1 comporte au moins un calculateur 30 relié à la fois aux premiers moyens d'entrée 22 pour analyser en fonction du temps les mesures des vibrations résultantes et aux seconds moyens d'entrée 24 pour analyser en fonction du temps les mesures des excitations dynamiques.

Un tel calculateur 30 permet alors de calculer un déphasage temporel ϕ entre les excitations dynamiques et les vibrations résultantes. Le calculateur 30 comporte alors une sortie reliée aux organes motorisés 15a-15d et peut ainsi les commander en fonction du déphasage temporel ϕ calculé.

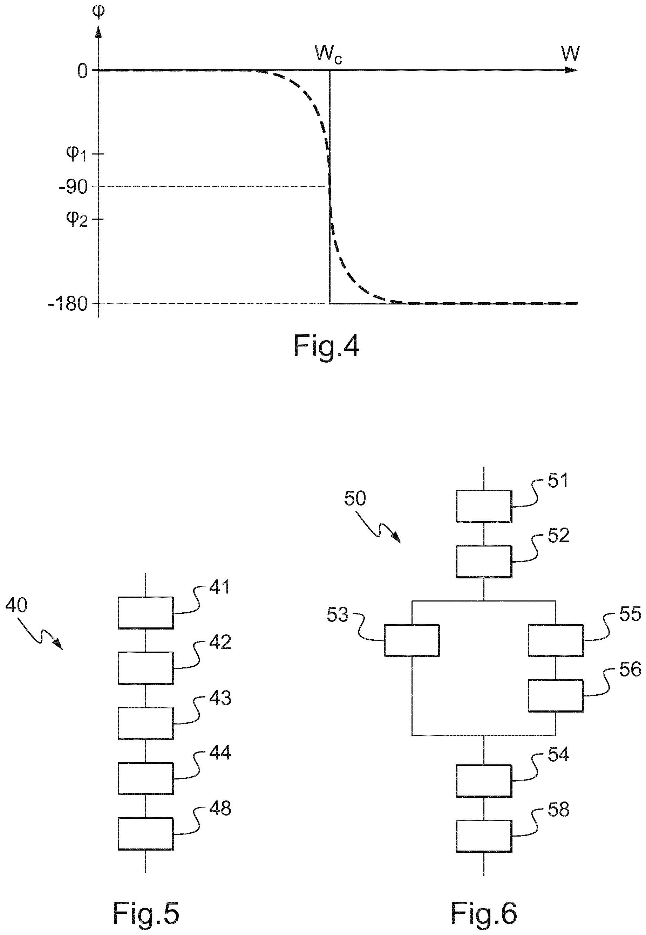

Tel que représenté à la figure 4, un tel déphasage temporel ϕ varie en fonction de la fréquence des excitations dynamiques. En outre, à la fréquence d'antirésonance ωc un diagramme asymptotique de représentation du déphasage temporel ϕ réel varie brusquement et passe de 0° à -180°. Le déphasage temporel ϕ réel est quant à lui égal à -90°.

Ainsi, lorsque le déphasage temporel ϕ réel est compris entre une première valeur de seuil ϕ1 et une seconde valeur de seuil ϕ2, le calculateur 30 peut identifier que le système antivibratoire 1 réalise un réglage optimal pour minimiser les vibrations résultantes transmises au fuselage 3 du giravion 2.

Cependant, si la valeur du déphasage temporel ϕ passe au dessus de la première valeur de seuil ϕ1 ou en dessous de la seconde valeur de seuil ϕ2, le calculateur 30 identifie que le réglage du système antivibratoire 1 n'est pas optimal et commande alors les organes motorisés 15a-15d pour déplacer en translation l'une des masses battantes 14a-14d le long d'un axe longitudinal La-Ld.

Les figures 5 et 6 représentent quant à elles deux variantes de méthodes de réglage d'un système antivibratoire tel que décrit précédemment.

Ainsi selon un premier exemple de réalisation représenté à la figure 5, une telle méthode de réglage 40 comporte une première étape d'analyse 41 pour analyser les vibrations résultantes auxquelles est soumis le fuselage 3 du giravion 2.

La méthode de réglage 40 comporte également une seconde étape d'analyse 42 pour analyser les excitations dynamiques auxquelles est soumis le carter 4 de la BTP 5.

La méthode de réglage 40 comporte ensuite une étape de calcul 43 pour calculer le déphasage temporel ϕ entre les excitations dynamiques et les vibrations résultantes ainsi qu'une étape de pilotage 44 pour piloter les organes motorisés 15a-15d en fonction du déphasage temporel ϕ calculé.

Selon ce premier exemple de réalisation de la méthode de réglage 40, l'étape de pilotage 44 peut alors piloter indépendamment les organes motorisés 15a-15d de quatre batteurs distincts 10a-10d comprenant un batteur avant gauche 10a, un batteur avant droit 10b, un batteur arrière gauche 10c et un batteur arrière droit 10d, les quatre batteurs 10a-10d pouvant être par exemple agencés symétriquement autour d'un axe de rotation 18 du rotor principal 7.

Par suite, la méthode de réglage 40 comporte une étape de déplacement 48 pour déplacer la masse battante 14a-14d afin de minimiser les vibrations résultantes transmises au fuselage 3 du giravion 2.

En outre, selon un second exemple de réalisation représenté à la figure 6, une telle méthode de réglage 50 comporte une première étape d'analyse 51 pour analyser les vibrations résultantes auxquelles est soumis le fuselage 3 du giravion 2.

La méthode de réglage 50 comporte également une seconde étape d'analyse 52 pour analyser les excitations dynamiques auxquelles est soumis le carter 4 de la BTP 5.

La méthode de réglage 50 comporte ensuite une étape de calcul 53 pour calculer le déphasage temporel ϕ entre les excitations dynamiques et les vibrations résultantes et une étape de pilotage 54 pour piloter les organes motorisés 15a-15d en fonction du déphasage temporel ϕ calculé.

En parallèle de l'étape de calcul 53, la méthode de réglage 50 comporte une étape de comparaison 55 permettant de comparer des amplitudes des mesures des vibrations résultantes puis une étape d'identification 56 pour identifier un critère de symétrie permettant de piloter les organes motorisés 15a-15d deux à deux simultanément.

Ainsi, selon ce second exemple de réalisation de la méthode de réglage 50, l'étape de pilotage 54 permet de piloter simultanément deux à deux les organes motorisés 15a-15d de quatre batteurs distincts 10a-10d comprenant un batteur avant gauche 10a, un batteur avant droit 10b, un batteur arrière gauche 10c et un batteur arrière droit 10d, les quatre batteurs 10a-10d étant agencés symétriquement autour d'un axe de rotation 18 dudit rotor principal 7.

Enfin, la méthode de réglage 50 comporte une étape de déplacement 58 pour déplacer la masse battante 14a-14d afin de minimiser les vibrations résultantes transmises au fuselage 3 du giravion 2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, tel que défini par les revendications.

## Revendications

1. Giravion (2) comportant :
• un rotor principal (7) permettant au moins de réaliser une sustentation, voire une propulsion, dudit giravion (2),
• au moins un moteur (6) pour entrainer en rotation ledit rotor principal (7) par rapport à un fuselage (3) dudit giravion (2),
• une boîte de transmission principale de puissance (5), dite BTP, pour transmettre un mouvement de rotation généré par ledit au moins un moteur (6) audit rotor principal (7), et
• un système antivibratoire (1) agencé à l'interface entre ledit fuselage (3) dudit giravion (2) et un carter (4) de ladite BTP, ledit système antivibratoire (1) comportant :
- au moins un batteur (10a-10d) comportant :
▪ une structure rigide (11a-11d) de forme longiligne s'étendant suivant une direction longitudinale (Da-Dd) entre une première extrémité (12a-12d) solidarisée avec ledit fuselage (3) dudit giravion (2) selon une articulation à au moins un degré de liberté en rotation autour d'un centre (O) et une deuxième extrémité libre (13a-13d),
▪ une masse battante (14a-14d) apte à se déplacer en translation suivant un axe longitudinal (La-Ld) parallèle à ladite direction longitudinale (Da-Dd) de ladite structure rigide (11a-11d), et
▪ des organes motorisés (15a-15d) permettant de commander le déplacement en translation de ladite masse battante (14a-14d) le long dudit axe longitudinal (La-Ld),
- au moins un organe de suspension de ladite BTP (5) comportant un moyen de rappel élastique (20a-20d) apte à rappeler en position ledit au moins un batteur (10a-10d) dans une position centrale, ledit au moins un batteur (10a-10d) pouvant osciller alternativement autour de ladite position centrale suivant un mouvement de rotation autour dudit centre (O),
- au moins un premier accéléromètre (21a-21d) agencé sur ledit fuselage (3) dudit giravion permettant de mesurer suivant au moins une direction des vibrations résultantes auxquelles est soumis ledit fuselage (3),
- des premiers moyens d'entrée (22) pour recevoir des mesures desdites vibrations résultantes,
- au moins un calculateur (30) relié auxdits premiers moyens d'entrée (22) pour analyser en fonction du temps lesdites mesures desdites vibrations résultantes,
**caractérisé en ce que** ledit système antivibratoire (1) comporte :
• au moins un second accéléromètre (23) agencé sur ledit carter (4) de ladite BTP (5) permettant de mesurer suivant au moins une direction des excitations dynamiques auxquelles est soumis ledit carter (4) de ladite BTP (5), et
• des seconds moyens d'entrée (24) pour recevoir des mesures desdites excitations dynamiques,
et **en ce que** ledit au moins un calculateur (30) est relié auxdits seconds moyens d'entrée (24) pour analyser en fonction du temps lesdites mesures desdites excitations dynamiques, ledit au moins un calculateur (30) permettant de calculer un déphasage temporel (ϕ) entre lesdites excitations dynamiques et lesdites vibrations résultantes, et permettant de piloter lesdits organes motorisés (15a-15d) en fonction dudit déphasage temporel (ϕ).

2. Giravion selon la revendication 1,
**caractérisé en ce que** lesdits organes motorisés (15a-15d) commandent le déplacement en translation de ladite masse battante (14a-14d) le long dudit axe longitudinal (La-Ld) selon un premier sens de translation lorsque ledit déphasage temporel (ϕ) est supérieur à une première valeur de seuil (ϕ1) et inversement le déplacement en translation de ladite masse battante (14a-14d) le long dudit axe longitudinal (La-Ld) selon un second sens de translation lorsque ledit déphasage temporel (ϕ) est inférieur à une seconde valeur de seuil (ϕ2).

3. Giravion selon la revendication 2,
**caractérisé en ce que** lesdits organes motorisés (15a-15d) stoppent le déplacement en translation de ladite masse battante (14a-14d) le long dudit axe longitudinal (La-Ld) lorsque ledit déphasage temporel (ϕ) est compris entre lesdites première et seconde valeurs de seuil (ϕ1) et (ϕ2).

4. Giravion selon l'une quelconque des revendications 1 à 3,
**caractérisé en ce que** ladite première valeur de seuil (ϕ1) est égale à -90°+α et ladite seconde valeur de seuil (ϕ2) est égale à -90°-α, α étant un angle compris entre 1 et 20° et préférentiellement compris entre 5° et 15°.

5. Giravion selon l'une quelconque des revendications 1 à 4,
**caractérisé en ce que** ledit au moins un premier accéléromètre (21a-21d) est agencé sur ledit fuselage (3) dudit giravion (2) à proximité immédiate d'une platine de liaison (17a-17d) formant partie de ladite articulation à au moins un degré de liberté en rotation autour dudit centre (O), ladite platine de liaison (17a-17d) étant solidarisée en liaison de type pivot avec ladite première extrémité (12a-12d) de ladite structure rigide (11a-11d) dudit batteur (10a-10d).

6. Giravion selon l'une quelconque des revendications 1 à 5,
**caractérisé en ce que** ledit au moins un premier accéléromètre (21a-21d) est agencé sur ledit fuselage (3) dudit giravion (2) à proximité d'une zone soumise à des vibrations résultantes maximales.

7. Giravion selon l'une quelconque des revendications 1 à 6,
**caractérisé en ce que** ledit au moins un calculateur (30) pilote indépendamment lesdits organes motorisés (15a-15d) de quatre batteurs distincts (10a-10d) comprenant un batteur avant gauche (10a), un batteur avant droit (10b), un batteur arrière gauche (10c) et un batteur arrière droit (10d), lesdits quatre batteurs étant agencés symétriquement autour d'un axe de rotation (18) dudit rotor principal (7).

8. Giravion selon l'une quelconque des revendications 1 à 6,
**caractérisé en ce que** ledit au moins un calculateur (30) compare des amplitudes des mesures desdites vibrations résultantes et en fonction de cette comparaison identifie un critère de symétrie permettant de piloter lesdits organes motorisés (15a-15d) deux à deux simultanément de respectivement au moins quatre batteurs distincts (10a-10d).

9. Giravion selon la revendication 8,
**caractérisé en ce que** ledit au moins un calculateur (30) pilote simultanément deux à deux lesdits organes motorisés (15a-15d) de quatre batteurs distincts (10a-10d) comprenant un batteur avant gauche (10a), un batteur avant droit (10b), un batteur arrière gauche (10c) et un batteur arrière droit (10d), lesdits quatre batteurs étant agencés symétriquement autour d'un axe de rotation (18) dudit rotor principal (7).

10. Méthode de réglage (40, 50) d'un système antivibratoire (1) équipant un giravion (2) selon l'une quelconque des revendications 1 à 9, ladite méthode de réglage (40, 50) comportant :
- une première étape d'analyse (41, 51) pour analyser lesdites vibrations résultantes auxquelles est soumis ledit fuselage (3) dudit giravion (2),
- une étape de déplacement (48, 58) pour déplacer ladite masse battante (14a-14d) afin de minimiser lesdites vibrations résultantes,
**caractérisée en ce que** ladite méthode de réglage (40, 50) comporte :
- une seconde étape d'analyse (42, 52) pour analyser lesdites excitations dynamiques auxquelles est soumis ledit carter (4) de ladite BTP (5),
- une étape de calcul (43, 53) pour calculer ledit déphasage temporel (ϕ) entre lesdites excitations dynamiques et lesdites vibrations résultantes, et
- une étape de pilotage (44, 54) pour piloter lesdits organes motorisés (15a-15d) en fonction dudit déphasage temporel (ϕ).

11. Méthode selon la revendication 10,
**caractérisée en ce que** ladite étape de pilotage (44, 54) permet de commander le déplacement en translation de ladite masse battante (14a-14d) le long dudit axe longitudinal (La-Ld) selon un premier sens de translation lorsque ledit déphasage temporel (ϕ) est supérieur à une première valeur de seuil (ϕ1) et inversement le déplacement en translation de ladite masse battante (14a-14d) le long dudit axe longitudinal (La-Ld) selon un second sens de translation lorsque ledit déphasage temporel (ϕ) est inférieur à une seconde valeur de seuil (ϕ2).

12. Méthode selon la revendication 11,
**caractérisée en ce que** ladite étape de pilotage (44, 54) permet de stopper le déplacement en translation de ladite masse battante (14a-14d) le long dudit axe longitudinal (La-Ld) lorsque ledit déphasage temporel (ϕ) est compris entre lesdites première et seconde valeurs de seuil (ϕ1) et (ϕ2).

13. Méthode selon l'une quelconque des revendications 10 à 12,
**caractérisée en ce que** ladite étape de pilotage (44) pilote indépendamment lesdits organes motorisés (15a-15d) de quatre batteurs distincts (10a-10d) comprenant un batteur avant gauche (10a), un batteur avant droit (10b), un batteur arrière gauche (10c) et un batteur arrière droit (10d), lesdits quatre batteurs (10a-10d) étant agencés symétriquement autour d'un axe de rotation (18) dudit rotor principal (7).

14. Méthode selon l'une quelconque des revendications 10 à 12,
**caractérisée en ce que** ladite méthode (50) comporte une étape de comparaison (55) pour comparer des amplitudes des mesures desdites vibrations résultantes et une étape d'identification (56) pour identifier un critère de symétrie permettant de piloter lesdits organes motorisés (15a-15d) deux à deux simultanément de respectivement au moins quatre batteurs distincts (10a-10d).

15. Méthode selon la revendication 14,
**caractérisée en ce que** ladite étape de pilotage (54) pilote simultanément deux à deux lesdits organes motorisés (15a-15d) de quatre batteurs distincts (10a-10d) comprenant un batteur avant gauche (10a), un batteur avant droit (10b), un batteur arrière gauche (10c) et un batteur arrière droit (10d), lesdits quatre batteurs (10a-10d) étant agencés symétriquement autour d'un axe de rotation (18) dudit rotor principal (7).

## Patentansprüche

1. Drehflügelflugzeug (2), umfassend:
• einen Hauptrotor (7), mit dem mindestens ein Anheben oder sogar ein Antrieb des Drehflügelflugzeugs (2) durchführbar ist,
• mindestens einen Motor (6) zum Drehantreiben des Hauptrotors (7) in Bezug auf einen Rumpf (3) des Drehflügelflugzeugs (2),
• ein Hauptleistungsgetriebe (5), genannt BTP (boite de transmission principale), zum Übertragen einer von dem mindestens einen Motor (6) erzeugten Drehbewegung auf den Hauptrotor (7), und
• ein Schwingungsdämpfungssystem (1), das an der Schnittstelle zwischen dem Rumpf (3) des Drehflügelflugzeugs (2) und einem Gehäuse (4) des BTP angeordnet ist, wobei das Schwingungsdämpfungssystem (1) umfasst:
- mindestens einen Schwinger (10a-10d), der umfasst:
▪ eine starre Struktur (11a-11d) mit länglicher Form, die sich in einer Längsrichtung (Da-Dd) zwischen einem ersten Ende (12a-12d), das an dem Rumpf (3) des Drehflügelflugzeugs (2) in einem Gelenk mit mindestens einem Freiheitsgrad um ein Zentrum (O) schwenkbar befestigt ist, und einem zweiten, freien Ende (13a-13d) erstreckt,
▪ eine Schwingmasse (14a-14d), die translatorisch entlang einer Längsachse (La-Ld) parallel zu der Längsrichtung (Da-Dd) der starren Struktur (11a-11d) bewegbar ist, und
▪ motorisierte Elemente (15a-15d) zum Steuern der translatorischen Bewegung der Schwingmasse (14a-14d) entlang der Längsachse (La-Ld),
- mindestens ein Aufhängeelement des BTP (5), das ein elastisches Rückstellmittel (20a-20d) umfasst, das eingerichtet ist, den mindestens einen Schwinger (10a-10d) in eine zentrale Position zurückzustellen, wobei der mindestens eine Schwinger (10a-10d) in einer Schwingbewegung um das Zentrum (O) alternierend um die zentrale Position schwingen kann,
- mindestens einen ersten Beschleunigungssensor (21a-21d), der an dem Rumpf (3) des Drehflügelflugzeugs angeordnet ist und es erlaubt, die resultierenden Vibrationen, denen der Rumpf (3) ausgesetzt ist, in mindestens einer Richtung zu messen,
- erste Eingabemittel (22) zum Empfangen von Messungen der resultierenden Schwingungen,
- mindestens einen Rechner (30), der mit den ersten Eingabemitteln (22) verbunden ist, um die Messungen der resultierenden Schwingungen als Funktion der Zeit zu analysieren,
**dadurch gekennzeichnet, dass** das Schwingungsdämpfungssystem (1) umfasst:
• mindestens einen zweiten Beschleunigungssensor (23), der an dem Gehäuse (4) des BTP (5) angeordnet ist und der es erlaubt, dynamische Anregungen, denen das Gehäuse (4) des BTP (5) ausgesetzt ist, in mindestens einer Richtung zu messen, und
• zweite Eingabemittel (24) zum Empfangen von Messungen der dynamischen Anregungen,
und dass der mindestens eine Rechner (30) mit den zweiten Eingabemitteln (24) verbunden ist, um die Messungen der dynamischen Anregungen als Funktion der Zeit zu analysieren, wobei der mindestens eine Rechner (30) die Berechnung einer Zeitphasenverschiebung (ϕ) zwischen den dynamischen Anregungen und den resultierenden Schwingungen ermöglicht und die motorisierten Elemente (15a-15d) als Funktion der Zeitphasenverschiebung (ϕ) zu steuern erlaubt.

2. Drehflügelflugzeug nach Anspruch 1, **dadurch gekennzeichnet, dass** die motorisierten Elemente (15a-15d) die translatorische Verschiebung der Schwingmasse (14a-14d) entlang der Längsachse (La-Ld) in eine erste Translationsrichtung steuern, wenn die Zeitphasenverschiebung (ϕ) größer als ein erster Grenzwert (ϕ1) ist, und umgekehrt die translatorische Verschiebung der Schwingmasse (14a-14d) entlang der Längsachse (La-Ld) in eine zweite Translationsrichtung steuern, wenn die Zeitphasenverschiebung (ϕ) kleiner als ein zweiter Grenzwert (ϕ2) ist.

3. Drehflügelflugzeug nach Anspruch 2, **dadurch gekennzeichnet, dass** die motorisierten Elemente (15a-15d) die translatorische Verschiebung der Schwingmasse (14a-14d) entlang der Längsachse (La-Ld) stoppen, wenn die Zeitphasenverschiebung (ϕ) zwischen dem ersten und zweiten Grenzwert (ϕ1) und (ϕ2) liegt.

4. Drehflügelflugzeug nach einem der Ansprüche 1 bis 3, **dadurch gekennzeichnet, dass** der erste Grenzwert (ϕ1) gleich -90°+α und der zweite Grenzwert (ϕ2) gleich -90°-α ist, wobei α ein Winkel zwischen 1 und 20° und vorzugsweise zwischen 5° und 15° ist.

5. Drehflügelflugzeug nach einem der Ansprüche 1 bis 4, **dadurch gekennzeichnet, dass** der mindestens eine erste Beschleunigungssensor (21a-21d) am Rumpf (3) des Drehflügelflugzeugs (2) in unmittelbarer Nähe einer Verbindungsplatte (17a-17d) angeordnet ist, die Teil des Gelenks mit mindestens einem Freiheitsgrad in Drehung um das Zentrum (O) ist, wobei die Verbindungsplatte (17a-17d) an dem ersten Ende (12a-12d) der starren Struktur (11a-11d) des Schwingers (10a-10d) schwenkbar befestigt ist.

6. Drehflügelflugzeug nach einem der Ansprüche 1 bis 5, **dadurch gekennzeichnet, dass** der mindestens eine erste Beschleunigungssensor (21a-21d) am Rumpf (3) des Drehflügelflugzeugs (2) in der Nähe eines Bereichs angeordnet ist, der maximalen resultierenden Vibrationen ausgesetzt ist.

7. Drehflügelflugzeug nach einem der Ansprüche 1 bis 6, **dadurch gekennzeichnet, dass** der mindestens eine Rechner (30) die motorisierten Elemente (15a-15d) von vier separaten Schwingern (10a-10d) unabhängig voneinander steuert, darunter ein linker vorderer Schwinger (10a), ein rechter vorderer Schwinger (10b), ein linker hinterer Schwinger (10c) und ein rechter hinterer Schwinger (10d), wobei die vier Schwinger symmetrisch um eine Drehachse (18) des Hauptrotors (7) angeordnet sind.

8. Drehflügelflugzeug nach einem der Ansprüche 1 bis 6, **dadurch gekennzeichnet, dass** der mindestens eine Rechner (30) Amplituden der Messungen der resultierenden Schwingungen vergleicht und in Abhängigkeit von diesem Vergleich ein Symmetriekriterium zum paarweise gleichzeitigen Steuern der motorisierten Komponenten (15a-15d) von mindestens vier verschiedenen Schwingern (10a-10d) identifiziert.

9. Drehflügelflugzeug nach Anspruch 8, **dadurch gekennzeichnet, dass** der mindestens eine Rechner (30) paarweise gleichzeitig die motorisierten Elemente (15a-15d) von vier verschiedenen Schwingern (10a-10d) steuert, darunter ein linker vorderer Schwinger (10a), ein rechter vorderer Schwinger (10b), ein linker hinterer Schwinger (10c) und ein rechter hinterer Schwinger (10d), wobei die vier Schwinger symmetrisch um eine Drehachse (18) des Hauptrotors (7) angeordnet sind.

10. Verfahren zum Einstellen (40, 50) eines Schwingungsdämpfungssystems (1), mit dem ein Drehflügelflugzeug (2) nach einem der Ansprüche 1 bis 9 ausgestattet ist, wobei das Einstellverfahren (40, 50) umfasst:
- einen ersten Analyseschritt (41, 51) zum Analysieren der resultierenden Vibrationen, denen der Rumpf (3) des Drehflügelflugzeugs (2) ausgesetzt ist,
- einen Verschiebeschritt (48, 58) zum Verschieben der Schwingmasse (14a-14d), um die resultierenden Schwingungen zu minimieren,
**dadurch gekennzeichnet, dass** das Einstellverfahren (40, 50) umfasst:
- einen zweiten Analyseschritt (42, 52) zum Analysieren der dynamischen Anregungen, denen das Gehäuse (4) des BTP (5) ausgesetzt ist,
- einen Rechenschritt (43, 53) zum Berechnen der Zeitphasenverschiebung (ϕ) zwischen den dynamischen Anregungen und den resultierenden Schwingungen, und
- - einen Ansteuerschritt (44, 54) zum Ansteuern der motorisierten Elemente (15a-15d) gemäß der Zeitphasenverschiebung (ϕ).

11. Verfahren nach Anspruch 10, **dadurch gekennzeichnet, dass** der Ansteuerschritt (44, 54) es ermöglicht, die translatorische Verschiebung der Schwingmasse (14a-14d) entlang der Längsachse (La-Ld) in eine erste Translationsrichtung zu steuern, wenn die Zeitphasenverschiebung (ϕ) größer als ein erster Grenzwert (ϕ1) ist, und umgekehrt die translatorische Verschiebung der Schwingmasse (14a-14d) entlang der Längsachse (La-Ld) in eine zweite Translationsrichtung zu steuern, wenn die Zeitphasenverschiebung (ϕ) kleiner als ein zweiter Grenzwert (ϕ2) ist.

12. Verfahren nach Anspruch 11, **dadurch gekennzeichnet, dass** der Ansteuerschritt (44, 54) es ermöglicht, die translatorische Verschiebung der Schwingmasse (14a-14d) entlang der Längsachse (La-Ld) zu stoppen, wenn die Zeitphasenverschiebung (ϕ) zwischen dem ersten und zweiten Grenzwert (ϕ1) und (ϕ2) liegt.

13. Verfahren nach einem der Ansprüche 10 bis 12, **dadurch gekennzeichnet, dass** der Ansteuerschritt (44) die motorisierten Elemente (15a-15d) von vier verschiedenen Schwingern (10a-10d) unabhängig voneinander steuert, darunter einen linken vorderen Schwinger (10a), einen rechten vorderen Schwinger (10b), einen linken hinteren Schwinger (10c) und einen rechten hinteren Schwinger (10d), wobei die vier Schwinger (10a-10d) symmetrisch um eine Drehachse (18) des Hauptrotors (7) angeordnet sind.

14. Verfahren nach einem der Ansprüche 10 bis 12, **dadurch gekennzeichnet, dass** das Verfahren (50) einen Vergleichsschritt (55) zum Vergleichen von Amplituden der Messungen der resultierenden Schwingungen und einen Identifikationsschritt (56) zum Identifizieren eines Symmetriekriteriums zum paarweise gleichzeitigen Steuern der motorisierten Elemente (15a-15d) von jeweils mindestens vier verschiedenen Schwingern (10a-10d) umfasst.

15. Verfahren nach Anspruch 14, **dadurch gekennzeichnet, dass** der Ansteuerschritt (54) die motorisierten Elemente (15a-15d) von vier verschiedenen Schwingern (10a-10d) paarweise gleichzeitig ansteuert, darunter einen linken vorderen Schwinger (10a), einen rechten vorderen Schwinger (10b), einen linken hinteren Schwinger (10c) und einen rechten hinteren Schwinger (10d), wobei die vier Schwinger (10a-10d) symmetrisch um eine Drehachse (18) des Hauptrotors (7) angeordnet sind.

## Claims

1. Rotorcraft (2) comprising:
- a main rotor (7) producing at least the lifting and even the propulsion of the rotorcraft (2).
- at least one engine (6) to rotate the main rotor (7) with respect to the fuselage (3) of the rotorcraft (2),
- a main power transmission box (5), called PTB, to transmit a rotational movement generated by the at least one engine (6) to the main rotor (7), and
- an antivibration system (1) arranged at the interface between the fuselage (3) of the rotorcraft (2) and a casing (4) of the PTB, wherein the antivibration system (1) comprises:
- at least one absorber (10a-10d) comprising:
∘ an elongated rigid structure (11a-11d) extending in a longitudinal direction (Da-Dd) between a first end (12a-12d) secured to the fuselage (3) of the rotorcraft (2) via an articulation with at least one degree of freedom in rotation about a center (O) and a second free end (13a-13d),
∘ an absorber mass (14a-14d) that is able to move in translation along a longitudinal axis (La-Ld) parallel to the longitudinal direction (Da-Dd) of the rigid structure (11a-11d), and
∘ motorised members (15a-15d) making it possible to control the displacement in translation of the absorber mass (14a-14d) along the longitudinal axis (La-Ld), -
- at least one PTB (5) suspension member comprising an elastic return means (20a-20d) that is designed to return the at least one absorber (10a-10d) to a central position, wherein the at least one absorber (10a-10d) is able to oscillate alternately about the central position following a rotational movement about the center (O),
- at least one first accelerometer (21a-21d) arranged on the fuselage (3) of the rotorcraft to measure in at least one direction the resultant vibrations to which the fuselage (3) is subjected,
- first input means (22) to receive the measurements of the resultant vibrations,
- at least one computer (30) connected to the first input means (22) to analyze the measurements of the resultant vibrations as a function of time,
**characterised in that** the antivibration system (1) comprises:
- at least one second accelerometer (23) arranged on the casing (4) of the PTB (5) making it possible to measure in at least one direction the dynamic excitations to which the casing (4) of the PTB (5) is subjected, and
- second input means (24) to receive the measurements of the dynamic excitations,
and **in that** the at least one computer (30) is connected to the second input means (24) to analyze, as a function of time, the measurements of the dynamic excitations, wherein the at least one computer (30) calculates a temporal phase shift (ϕ) between the dynamic excitations and the resultant vibrations, and to control the motorised members (15a-15d) as a function of the temporal phase shift (ϕ).

2. Rotorcraft according to Claim 1, **characterised in that** the motorised members (15a-15d) control the displacement in translation of the absorber mass (14a-14d) along the longitudinal axis (La-Ld) in a first direction of translation when the temporal phase shift (ϕ) is greater than a first threshold value (ϕ1) and, conversely, the displacement in translation of the absorber mass (14a-14d) along the longitudinal axis (La-Ld) in a second direction of translation when the temporal phase shift (ϕ) is less than a second threshold value (ϕ2).

3. Rotorcraft according to Claim 2, **characterised in that** the motorised members (15a-15d) stop displacement in translation of the absorber mass (14a-14d) along the longitudinal axis (La-Ld) when the phase shift (ϕ) is between the first and second threshold values (ϕ1) and (ϕ2).

4. Rotorcraft according to any one of Claims 1 to 3, **characterised in that** the first threshold value (ϕ1) is equal to at -90°+a and the second threshold value (ϕ2) is equal to -90°-α, where a is an angle of between 1 and 20°, preferably between 5° and 15°.

5. Rotorcraft according to any one of Claims 1 to 4, **characterised in that** the at least one first accelerometer (21a-21d) is arranged on the fuselage (3) of the rotorcraft (2) in the immediate vicinity of a connecting plate (17a-17d) forming part of the articulation of at least one degree of freedom in rotation about the center (O), wherein the connecting plate (17a-17d) is secured in a pivoting type connection with the first end (12a-12d) of the rigid structure (11a-11d) of the absorber (10a-10d).

6. Rotorcraft according to any one of Claims 1 to 5, **characterised in that** the at least one first accelerometer (21a-21d) is arranged on the fuselage (3) of the rotorcraft (2) in the vicinity of an area subjected to maximum resultant vibrations.

7. Rotorcraft according to any one of Claims 1 to 6, **characterised in that** the at least one computer (30) independently controls the motorised members (15a-15d) of four separate absorbers (10a-10d) comprising a left front absorber (10a), a right front absorber (10b), a left rear absorber (10c) and a right rear absorber (10d), wherein the four absorbers are arranged symmetrically about an axis of rotation (18) of the main rotor (7).

8. Rotorcraft according to any one of Claims 1 to 6, **characterised in that** the at least one computer (30) compares the amplitudes of the measurements of the resultant vibrations and, based on this comparison, identifies a symmetry criterion allowing the respective simultaneous control of the motorised members (15a-15d) two by two, of the at least four separate absorbers (10a ∼ 10d).

9. Rotorcraft according to Claim 8, **characterised in that** the at least one computer (30) simultaneously controls two by two the motorised members (15a-15d) of the four separate absorbers (10a-10d) comprising a left front absorber (10a), a right front absorber (10b), a left rear absorber (10c) and a right rear absorber (10d), wherein the four absorbers are arranged symmetrically about an axis of rotation (18) of the main rotor (7).

10. Antivibration (1) control method (40, 50) implemented in a rotorcraft (2) according to any one of Claims 1 to 9, wherein the method of adjustment (40, 50) comprises:
- a first analysis step (41, 51) to analyze the resultant vibrations to which the fuselage (3) of the rotorcraft (2) is subjected
- a displacement step (48, 58) to displace the absorber mass (14a-14d) in order to minimise the resultant vibrations,
**characterised in that** the adjustment method (40, 50) comprises:
- a second analysis step (42, 52) to analyze the dynamic excitations to which the casing (4) of the PTB (5) is subjected,
- a calculation step (43, 53) to calculate the temporal phase shift (ϕ) between the dynamic excitations and the resultant vibrations, and
- a control step (44, 54) to control the motorised members (15a-15d) as a function of the temporal phase shift (ϕ).

11. Method according to Claim 10, **characterised in that** the control step (44, 54) makes it possible to control the displacement in translation of the absorber mass (14a-14d) along the longitudinal axis (La-Ld) according to a first translation direction when the temporal phase shift (ϕ) is greater than a first threshold value (ϕ1) and, conversely, the displacement in translation of the absorber mass (14a-14d) along the longitudinal axis (La-Ld) according to a second translation direction when the temporal phase shift (ϕ) is less than a second threshold value (ϕ2).

12. Method according to Claim 11, **characterised in that** the control step (44, 54) makes it possible to stop the displacement in translation of the absorber mass (14a-14d) along the longitudinal axis (La-Ld) when the phase shift time (ϕ) is between the first and second threshold values (ϕ1) and (ϕ2).

13. Method according to any one of Claims 10 to 12, **characterised in that** the control step (44) independently controls the motorised members (15a-15d) of four separate absorbers (10a-10d) comprising a front left absorber (10a), a right front absorber (10b), a left rear absorber (10c) and a right rear absorber (10d), wherein the four absorbers (10a-10d) are arranged symmetrically about an axis of rotation (18) of the main rotor (7).

14. Method according to any one of Claims 10 to 12, **characterised in that** the method (50) comprises a comparison step (55) to compare the amplitudes of the measurements of the resultant vibrations, and an identifying step (56) to identify a symmetry criterion to respective simultaneous control the motorised members (15a-15d) two by two, of the at least four separate absorbers (10a-10d).

15. Method according to Claim 14, **characterised in that** the control step (54) simultaneously controls two by two the motorised members (15a-15d) of the four separate absorbers (10a-10d) comprising a front left absorber (10a). a front right absorber (10b), a left rear absorber (10c) and a right rear absorber (10d), wherein the four absorbers (10a-10d) are arranged symmetrically about an axis of rotation (18) of the main rotor (7).
